# EUROPEAN PATENT SPECIFICATION

(11) **EP 4 297 176 B1**
(45) Date of publication and mention of the grant of the patent: **29.04.2026**
(21) Application number: 23767156.5
(22) Date of filing: 08.03.2023
(51) Int. Cl.: H01M 50/572, H01M 50/502, H01M 50/521, H01M 50/581, H01M 50/20, H01M 50/296, H01M 50/204, H01R 13/405, H01R 13/533, H01R 43/24

(54) **HIGHLY HEAT RESISTANT BATTERY PACK CONNECTOR FOR PREVENTING THERMAL RUNAWAY**
HOCHHITZEBESTÄNDIGER BATTERIEPACKVERBINDER ZUR VERHINDERUNG VON THERMISCHEM DURCHGEHEN
CONNECTEUR DE BLOC-BATTERIE HAUTEMENT RÉSISTANT À LA CHALEUR POUR EMPÊCHER UN EMBALLEMENT THERMIQUE

(30) Priority: 11.03.2022 KR 20220030698
(43) Date of publication of application: 27.12.2023
(73) Proprietor: LG Energy Solution, Ltd., Seoul 07335 (KR)
(72) Inventor: LEE, Chang Hun, Daejeon 34122 (KR)
(74) Representative: Goddar, Heinz J.
(86) International application number: PCT/KR2023/003150
(87) International publication number: WO 2023/172055

(56) References cited:
- JP-A- 2009 230 895
- KR-A- 20000 077 059
- KR-A- 20170 059 669
- KR-A- 20170 059 669
- KR-A- 20170 073 468
- KR-A- 20190 009 976
- KR-A- 20190 009 976
- US-B2- 9 397 431

## Description

### [Technical Field]

This application claims the benefit of priority to Korean Patent Application No. 2022-0030698 filed on March 11, 2022.

The present invention relates to a high heat resistant connector for battery packs capable of preventing thermal runaway. More particularly, the present invention relates to a high heat resistant connector for battery packs capable of preventing thermal runaway, wherein the connector is provided in a battery pack used as an energy source of a device requiring high safety, such as an electric vehicle.

### [Background Art]

A lithium secondary battery, which has high energy density and excellent lifespan characteristics, is mainly used as an energy source of an electric vehicle. There is a danger of the lithium secondary battery having high energy density exploding when the lithium secondary battery overheats. In addition, when fire breaks out, it is difficult to extinguish fire until the lithium secondary battery is completely combusted.

When thermal runaway occurs due to abnormality of a battery cell in a battery pack, a connector for battery packs adjacent to an electrode lead is most easily exposed to flames. Secondary damage may be caused due to breakage of the connector for battery packs. A conventional connector for battery packs is made of a material that exhibits low heat resistance, whereby the connector is easily melted. As a result, flames due to thermal runaway may be spread out of the battery pack.

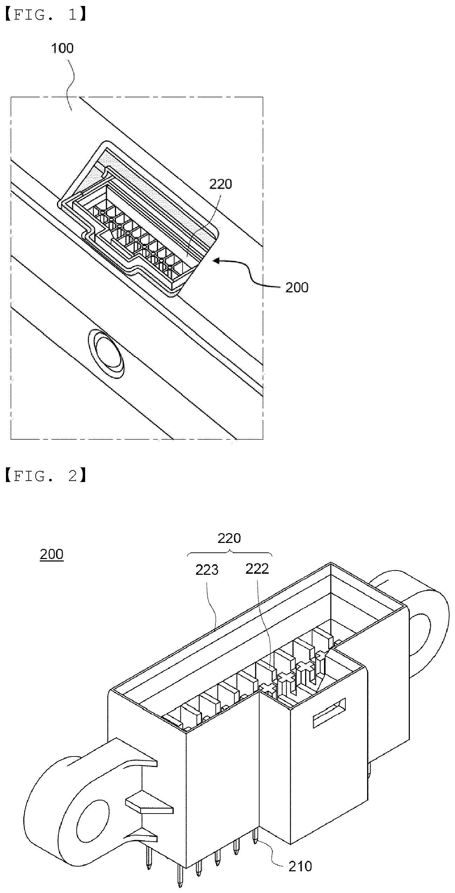

FIG. 1 is a perspective view of a conventional connector for battery packs. Referring to FIG. 1, the conventional connector 200 for battery packs is located at one end of a battery pack 100.

Since a lower end of the conventional connector 200 for battery packs is electrically connected to an electrode terminal of a battery module, the temperature of the conventional connector for battery packs abruptly increases when fire breaks out. Since the conventional connector for battery packs is made of plastic, a housing 210 of the connector for battery packs may be easily melted when the temperature of the battery pack increases.

When the housing 210 of the connector for battery packs is melted, an opening is formed in a pack case, and flames and sparks may erupt through the opening. As a result, thermal runaway may be spread to another battery pack, which seriously reduces safety.

Patent Document 1 relates to an electrical connector including a socket, a terminal inserted into the socket, a pin inserted into the terminal, and a header having a plurality of pin through-holes, through which the pin is inserted, wherein the terminal includes a pin contact portion and a terminal portion formed at a lower part of the pin contact portion, the pin contact potion includes a pair of first arms formed on a first surface and a surface that faces the first surface and a pair of second arms formed on a second surface and a surface that faces the second surface, and the pin is brought into contact with the first arms and the second arms.

In Patent Document 1, the pin is brought into contact with the first arms and the second arms, whereby the terminal and the pin contact each other on four surfaces, whereby an initial yield rate of a contact point may be minimized, the contact point may be aligned with a center line, and the contact state may be stably maintained.

However, Patent Document 1 does not suggest technology for preventing exposure of flames to the outside when thermal runaway occurs in a battery pack.

Patent Document 2 relates to a connector for printed circuit boards, the connector including a contact terminal having a contact pin configured to contact another connector at one end thereof and a terminal portion configured to contact a printed circuit board at the other end thereof, a housing at which the contact terminal is installed, and a hood configured to cover the contact pin of the contact terminal.

Patent Document 2 discloses technology capable of easily assembling and repairing the connector and easily attaching the connector to the printed circuit board but does not suggest a construction for improving heat resistance of the connector.

Patent Document 3 relates to a heat treatment device including a connector with improved heat resistance, which is used to thermally treat a display panel or a semiconductor device. Patent Document 3 discloses an insulating tube, made of a ceramic material, added to the outside of an external connector member or an inner housing member made of a ceramic material, wherein transfer of heat in the inner housing member to the external connector member is prevented.

However, Patent Document 3 does not solve a problem in that thermal runaway occurring in a battery pack spreads to the outside of the battery pack.

The conventional connector for battery packs is melted when thermal runaway occurs due to overheating, whereby a great problem may occur; however, technology capable of considering such a problem or solving the problem has not yet been proposed.

### (Prior Art Documents)

(Patent Document 1) Korean Patent Application Publication No. 2017-0059669 (2017.05.31)
(Patent Document 2) Korean Registered Patent Publication No. 1136682 (2012.04.06)
(Patent Document 3) Korean Registered Patent Publication No. 1668787 (2016.10.18)

US 9,397,431 B2 relates to an electrical connector that electrically connects between a sensor unit used in an internal combustion engine and an external circuit, and to a method of manufacturing the electrical connector. The electrical connector includes a connector case having a cavity and a partition that forms a base of the cavity. The electrical connector further includes a terminal holder into which a plurality of terminals is insertion-molded which penetrate the partition and protrude into the cavity. The connector case and the terminal holder are made of a same primary molding resin.

### [Disclosure]

### [Technical Problem]

The present invention has been made in view of the above problems, and it is an object of the present invention to provide a high heat resistant connector for battery packs capable of preventing thermal runaway, wherein, when flames are generated in a battery pack, melting of the connector for battery packs having low resistance to the flames is prevented and spread of thermal runaway is inhibited.

### [Technical Solution]

The present invention is defined according to the subject matter of the appended independent claims. Particular embodiments are given by the additional features of the appended dependent claims. In order to accomplish the above object, the present invention provides a connector for battery packs, the connector including a housing to which a terminal pin configured to serve as an electrical connection path is mounted, wherein the housing includes a lower end portion to which the terminal pin is coupled and a main body portion having a partition wall portion configured to prevent deformation of the terminal pin when an external terminal is coupled to the terminal pin, the lower end portion being mounted to the main body portion, and the lower end portion and the main body portion are made of different materials.

The main body portion includes a high heat resistant material.

The high heat resistant material is a metal or ceramic coated with a urethane-based or inorganic-based material, and the metal is a stainless steel-based metal.

The main body portion may include a material having a melting point of 1,000°C or higher.

The planar size of the lower end portion may be equal to the planar size of the interior of the main body portion.

The lower end portion may have a protrusion projecting outwards from at least a part of an outer periphery thereof, the main body portion may define a recess extending into a part thereof to which the protrusion is mounted, and the protrusion may be inserted into the recess, so that the lower end portion may be fixed to the main body portion.

The lower end portion may include a plastic material having a lower melting point than a material comprising the main body portion.

The terminal pin may be coupled to the lower end portion by injection molding.

The connector may be a low-voltage connector.

The present invention provides a battery pack having the connector mounted therein.

In addition, the present invention provides a method of manufacturing the connector. Specifically, the method may include (a) locating a terminal pin in a mold, (b) adding an injection material to form a lower end portion, and(c) coupling the lower end portion having the terminal pin coupled thereto to a main body portion. The lower end portion and the main body portion are made of different materials. The main body portion comprises a high heat resistant material. The high heat resistant material is a metal or ceramic coated with a urethane-based or inorganic-based material. The metal is a stainless steel-based metal.

The planar size of the lower end portion may be equal to the planar size of the interior of the main body portion, and step (c) may be performed through a process of coupling the lower end portion to the main body portion by interference fitting.

The lower end portion may have a protrusion projecting outwards from at least a part of an outer periphery thereof, the main body portion may define a recess extending into a part thereof to which the protrusion is mounted, and step (c) may be performed by inserting the protrusion into the recess.

In addition, the present invention provides another method of manufacturing the connector. Specifically, the method may include (a) pouring an injection material into a mold to form a lower end portion, (b) coupling a terminal pin to the lower end portion, and (c) coupling the lower end portion having the terminal pin coupled thereto to a main body portion. The lower end portion and the main body portion are made of different materials. The main body portion comprises a high heat resistant material. The high heat resistant material is a metal or ceramic coated with a urethane-based or inorganic-based material. The metal is a stainless steel-based metal.

In addition, the present invention may provide various combinations of the above constructions.

### [Advantageous Effects]

As is apparent from the above description, in a connector for battery packs according to the present invention, the remaining part of a housing other than a lower end portion to which a terminal pin is mounted, i.e. a main body portion, is made of a high heat resistant material, whereby it is possible to prevent the main body portion of the connector for battery packs from being melted even in a high-temperature environment.

Since melting of the main body portion is prevented, as described above, the shape of the connector for battery packs is maintained even in a high-temperature environment, whereby it is possible to provide a battery pack capable of preventing spread of a thermal runaway phenomenon out of the battery pack, thereby having improved safety.

### [Description of Drawings]

FIG. 1 is a perspective view of a conventional connector for battery packs.
FIG. 2 is a perspective view of a connector for battery packs according to a first embodiment.
FIG. 3 is a vertical sectional perspective view of FIG. 2.
FIG. 4 is an exploded perspective view of FIG. 2.
FIG. 5 is an exploded perspective view of a connector for battery packs according to a second embodiment.
FIG. 6 is a partial vertical sectional view of FIG. 5.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

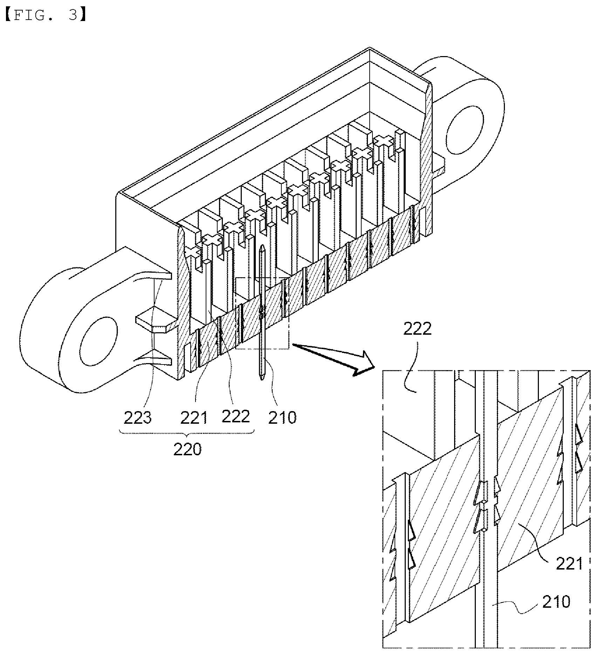

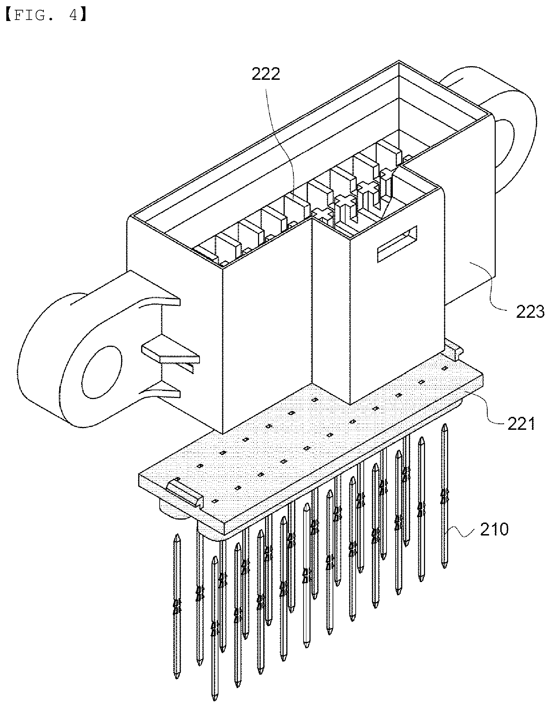

FIG. 2 is a perspective view of a connector for battery packs according to a first embodiment, FIG. 3 is a vertical sectional perspective view of FIG. 2, and FIG. 4 is an exploded perspective view of FIG. 2.

Referring to FIGs. 2 to 4, the connector 200 for battery packs according to the present invention includes a housing 220 to which a terminal pin 210 configured to serve as an electrical connection path is mounted. The housing 220 includes a lower end portion 221 to which the terminal pin 210 is coupled and a main body portion 223 having a partition wall portion 222 configured to prevent deformation of the terminal pin 210 when an external terminal is coupled, the lower end portion 221 being mounted to the main body portion, wherein the lower end portion 221 and the main body portion 223 are made of different materials.

The connector 200 for battery packs according to the present invention, which is mounted in one end of a battery pack 100, is electrically connected to a terminal of a battery module in the battery pack.

The connector 200 for battery packs may be a low-voltage connector. The low-voltage connector may be used to drive a battery management system or electric parts or to sense the voltage and temperature of battery cells.

When fire breaks out in any one battery cell of the battery pack during use of the battery pack, the temperature of an electrode lead of the battery cell is highest, and the connector for battery packs adjacent to the electrode lead is easily exposed to flames. When thermal runaway occurs in the battery cell, the temperature of the connector for battery packs abutting the battery pack abruptly increases, since the surface temperature of the battery pack is 600°C or higher. In order to prevent deformation of the connector for battery packs and thus to prevent flames from erupting out of the battery pack, therefore, it is preferable for the connector for battery packs to be made of a material having a high melting temperature.

The housing 220 includes the lower end portion 221, to which the terminal pin 210 is mounted, and the part of the lower end portion 221 to which the terminal pin 211 is mounted is complicated to mold and requires precision at the time of manufacture thereof. Consequently, it is preferable for the lower end portion 221 to be manufactured using a material having a low melting point by injection molding, and it is preferable for the remaining part other than the lower end portion 221, i.e. the main body portion 223, to be made of a high heat resistant material such that the shape of the lower end portion is maintained even when the temperature of the battery pack increases.

For example, the lower end portion 221 may be made of a material that can be injection molded, e.g. a plastic material having a lower melting point than the main body portion 223.

The high heat resistant material, of which the main body portion 223 is made, may be a material that is maintained in shape without melting even at a high temperature of 1,000°C or higher, e.g. a metal or ceramic coated with a urethane-based or inorganic-based material, and the metal may be a stainless steel-based metal having a melting point of 1,000°C or higher.

In the housing of the connector for battery packs according to the present invention, as described above, the lower end portion and the main body portion may be made of different materials, and the lower end portion and the main body portion may be separately manufactured by molding and may then be coupled to each other in order to manufacture the connector for battery packs.

The terminal pin 210 may be coupled to the lower end portion 221 using an injection molding method of disposing the terminal pin 210 in a mold, adding an injection material for forming the lower end portion to the terminal pin 210, and solidifying the injection material.

In a concrete example, the planar size of the lower end portion 221 may be equal to the planar size of the interior of the main body portion 223.

That is, such that the entirety of an outer circumferential surface of the lower end portion 221 may be coupled to the entirety of an inner circumferential surface of the main body portion 223 in tight contact therewith.

A method of manufacturing the connector for battery packs according to the first embodiment may include (a) a step of locating a terminal pin in a mold, (b) a step of adding an injection material to form a lower end portion, and (c) a step of coupling the lower end portion having the terminal pin coupled thereto to a main body portion.

As described above, the connector for battery packs according to the present invention may be manufactured using an insert injection molding method.

The planar size of the lower end portion 221 may be equal to the planar size of the interior of the main body portion 223, and step (c) may be performed through a process of coupling the lower end portion 221 to the main body portion 223 by interference fitting.

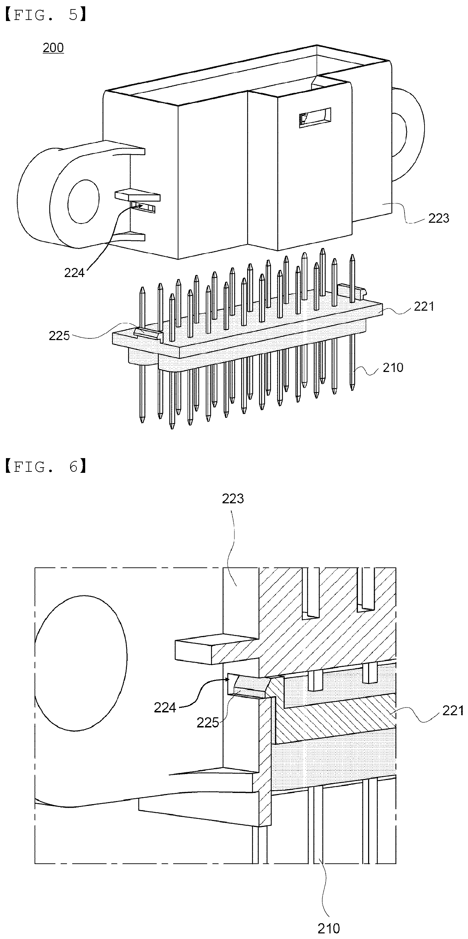

FIG. 5 is an exploded perspective view of a connector for battery packs according to a second embodiment, and FIG. 6 is a partial vertical sectional view of FIG. 5.

Referring to FIGs. 5 and 6, the connector 200 for battery packs according to the second embodiment includes a housing 220 to which a terminal pin 210 configured to serve as an electrical connection path is mounted. The housing 220 includes a lower end portion 221 to which the terminal pin 210 is coupled and a main body portion 223 having a partition wall portion configured to prevent deformation of the terminal pin 210 when an external terminal is coupled, the lower end portion 221 being mounted to the main body portion, wherein the lower end portion 221 and the main body portion 223 are made of different materials.

In the connector 200 for battery packs according to the second embodiment, a protrusion 225 may be formed on at least a part of an outer periphery of the lower end portion 221 so as to project outwards, and a recess 224 may be formed in the part of the main body portion 223 to which the protrusion 225 is mounted, wherein the protrusion 225 may be inserted into the recess 224, whereby the lower end portion 221 may be fixed to the main body portion 223.

A method of manufacturing the connector for battery packs according to the second embodiment may include (a) a step of locating a terminal pin in a mold, (b) a step of adding an injection material to form a lower end portion, and (c) a step of coupling the lower end portion having the terminal pin coupled thereto to a main body portion. Step (c) may be performed through a process of inserting a protrusion 225 projecting from an outer periphery of the lower end portion 221 into a through-hole or recess 224 formed in the main body portion 223.

The protrusion 225 formed on the outer periphery of the lower end portion 221 is inclined so as to have a thickness gradually decreasing toward the end thereof, whereby the protrusion 225 may be easily inserted into the recess 224. In addition, after the protrusion 225 is inserted into the recess 224, the state in which the protrusion 225 and the recess 224 are fixed to each other by coupling may be stably maintained. Consequently, step (c) may be performed through a process of inserting the protrusion 225 into the recess 224 and a process of fixing the protrusion.

In a concrete example, when, in order to manufacture the connector for battery packs without using the insert injection molding method, a method of manufacturing a connector for battery packs including (a) a step of pouring an injection material into a mold to form a lower end portion, (b) a step of coupling a terminal pin to the lower end portion, and (c) a step of coupling the lower end portion having the terminal pin coupled thereto to a main body portion may be used.

Step (b) may be performed using a method of coupling the terminal pin to a terminal pin insertion portion of the lower end portion by press fitting.

The method of mounting the terminal pin to the lower end portion is not limited to the above-described method, and the mounting method is not particularly restricted as long as it is possible to secure the state in which the terminal pin is stably mounted to the lower end portion.

As is apparent from the above description, in the connector for battery packs according to the present invention, the remaining part of the housing other than the lower end portion 221, which requires precise molding, i.e. the main body portion 223, is made of a high heat resistant material. When a battery pack having the connector for battery packs mounted therein is used, therefore, the main body portion 223 made of the high heat resistant material is neither melted nor deformed even though flames are generated in the battery pack. As a result, the shape of the main body portion 223 is maintained, whereby it is possible to prevent flames from erupting out of the battery pack when fire breaks out in the battery pack. Consequently, it is possible to inhibit spread of thermal runaway to another battery pack. Furthermore, it is possible to secure user safety.

### (Description of Reference Symbols)

- 100:: Battery pack
- 200:: Connector for battery packs
- 210:: Terminal pin
- 220:: Housing
- 221:: Lower end portion
- 222:: Partition wall portion
- 223:: Main body portion
- 224:: Recess
- 225:: Protrusion

## Claims

1. A connector (200) for battery packs (100), the connector (200) comprising a housing (220) to which a terminal pin (210) configured to serve as an electrical connection path is mounted, wherein
the housing (220) comprises:
a lower end portion (221) to which the terminal pin (210) is coupled; and
a main body portion (223) having a partition wall portion (222) configured to prevent deformation of the terminal pin (210) when an external terminal is coupled to the terminal pin (210), the lower end portion (221) being mounted to the main body portion (223),
wherein the lower end portion (221) and the main body portion (223) are made of different materials,
wherein the main body portion (223) comprises a high heat resistant material, and
wherein the high heat resistant material is a metal or ceramic coated with a urethane-based or inorganic-based material, and the metal is a stainless steel-based metal.

2. The connector (200) according to claim 1, wherein the high heat resistant material, of which the main body portion (223) is made, is a material that is maintained in shape without melting even at a high temperature of 1,000°C or higher.

3. The connector (200) according to claim 1, wherein a planar size of the lower end portion (221) is equal to a planar size of an interior of the main body portion (223).

4. The connector (200) according to claim 1, wherein the lower end portion (221) has a protrusion (225) projecting outwards from at least a part of an outer periphery thereof, the main body portion (223) defines a recess (224) extending into a part thereof to which the protrusion (225) is mounted, and the protrusion (225) is inserted into the recess (224), so that the lower end portion (221) is fixed to the main body portion (223).

5. The connector (200) according to claim 1, wherein the lower end portion (221) comprises a plastic material having a lower melting point than a material comprising the main body portion (223).

6. The connector (200) according to claim 5, wherein the terminal pin (210) is coupled to the lower end portion (221) by injection molding.

7. The connector (200) according to any one of claims 1 **to 6,** wherein the connector (200) is a low-voltage connector.

8. A battery pack (100) having the connector (200) according to any one of claims 1 to 7 mounted therein.

9. A method of manufacturing the connector (200) according to any one of claims 1 to 7, the method comprising:
(a) locating a terminal pin (210) in a mold;
(b) adding an injection material to form a lower end portion (221); and
(c) coupling the lower end portion (221) having the terminal pin (210) coupled thereto to a main body portion (223),
wherein the lower end portion (221) and the main body portion (223) are made of different materials,
wherein the main body portion (223) comprises a high heat resistant material, and
wherein the high heat resistant material is a metal or ceramic coated with a urethane-based or inorganic-based material, and the metal is a stainless steel-based metal.

10. The method according to claim 9, wherein
a planar size of the lower end portion (221) is equal to a planar size of an interior of the main body portion (223), and
step (c) is performed through a process of coupling the lower end portion (221) to the main body portion (223) by interference fitting.

11. The method according to claim 9, wherein the lower end portion (221) has a protrusion (225) projecting outwards from at least a part of an outer periphery thereof, the main body portion (223) defines a recess (224) extending into a part thereof to which the protrusion (225) is mounted, and step (c) is performed by inserting the protrusion (225) into the recess (224).

12. A method of manufacturing the connector (200) according to any one of claims 1 to 7, the method comprising:
(a) pouring an injection material into a mold to form a lower end portion (221);
(b) coupling a terminal pin (210) to the lower end portion (221); and
(c) coupling the lower end portion (221) having the terminal pin (210) coupled thereto to a main body portion (223);
wherein the lower end portion (221) and the main body portion (223) are made of different materials,
wherein the main body portion (223) comprises a high heat resistant material, and
wherein the high heat resistant material is a metal or ceramic coated with a urethane-based or inorganic-based material, and the metal is a stainless steel-based metal.

## Patentansprüche

1. Verbinder (200) für Batteriepacks (100), wobei der Verbinder (200) ein Gehäuse (220) aufweist, an dem ein Anschlussstift (210) montiert ist, der konfiguriert ist, als ein elektrischer Verbindungspfad zu dienen, wobei
das Gehäuse (220) aufweist:
einen unteren Endabschnitt (221), mit dem der Anschlussstift (210) gekoppelt ist; und
einen Hauptkörperabschnitt (223) mit einem Trennwandabschnitt (222), der konfiguriert ist, eine Verformung des Anschlussstifts (210) zu verhindern, wenn ein externer Anschluss mit dem Anschlussstift (210) gekoppelt wird, wobei der untere Endabschnitt (221) an dem Hauptkörperabschnitt (223) montiert ist,
wobei der untere Endabschnitt (221) und der Hauptkörperabschnitt (223) aus unterschiedlichen Materialien hergestellt sind,
wobei der Hauptkörperabschnitt (223) ein hochwärmebeständiges Material enthält, und
wobei das hochwärmebeständige Material ein Metall oder Keramik ist, das mit einem Material auf Urethanbasis oder anorganischer Basis beschichtet ist, und das Metall ein Metall auf Edelstahlbasis ist.

2. Verbinder (200) nach Anspruch 1, wobei das hochwärmebeständige Material, aus dem der Hauptkörperabschnitt (223) hergestellt ist, ein Material ist, das in Form gehalten wird, ohne selbst bei einer hohen Temperatur von 1.000 °C oder höher zu schmelzen.

3. Verbinder (200) nach Anspruch 1, wobei eine Größe des unteren Endabschnitts (221) in einer Ebene gleich einer Größe eines Inneren des Hauptkörperabschnitts (223) in einer Ebene ist.

4. Verbinder (200) nach Anspruch 1, wobei der untere Endabschnitt (221) einen Vorsprung (225) aufweist, der von mindestens einem Teil eines Außenumfangs davon nach außen vorsteht, der Hauptkörperabschnitt (223) eine Aussparung (224) definiert, die sich in einen Teil davon erstreckt, an dem der Vorsprung (225) montiert ist, und der Vorsprung (225) in die Aussparung (224) eingesetzt ist, so dass der untere Endabschnitt (221) an dem Hauptkörperabschnitt (223) befestigt ist.

5. Verbinder (200) nach Anspruch 1, wobei der untere Endabschnitt (221) ein Kunststoffmaterial enthält, das einen niedrigeren Schmelzpunkt als ein Material aufweist, das den Hauptkörperabschnitt (223) enthält.

6. Verbinder (200) nach Anspruch 5, wobei der Anschlussstift (210) durch Spritzgießen mit dem unteren Endabschnitt (221) gekoppelt wird.

7. Verbinder (200) nach einem der Ansprüche 1 bis 6, wobei der Verbinder (200) ein Niederspannungsverbinder ist.

8. Batteriepack (100), in dem der Verbinder (200) nach einem der Ansprüche 1 bis 7 montiert ist.

9. Verfahren zum Herstellen des Verbinders (200) nach einem der Ansprüche 1 bis 7, wobei das Verfahren aufweist:
(a) Anordnen eines Anschlussstifts (210) in einer Form;
(b) Hinzufügen eines Spritzgussmaterials, um einen unteren Endabschnitt (221) zu bilden; und
(c) Koppeln des unteren Endabschnitts (221), mit dem der Anschlussstift (210) gekoppelt ist, mit einem Hauptkörperabschnitt (223),
wobei der untere Endabschnitt (221) und der Hauptkörperabschnitt (223) aus unterschiedlichen Materialien hergestellt sind,
wobei der Hauptkörperabschnitt (223) ein hochwärmebeständiges Material enthält, und
wobei das hochwärmebeständige Material ein Metall oder Keramik ist, das mit einem Material auf Urethanbasis oder anorganischer Basis beschichtet ist, und das Metall ein Metall auf Edelstahlbasis ist.

10. Verfahren nach Anspruch 9, wobei
eine Größe des unteren Endabschnitts (221) in einer Ebene gleich einer Größe eines Inneren des Hauptkörperabschnitts (223) in einer Ebene ist, und
Schritt (c) durch einen Prozess des Koppelns des unteren Endabschnitts (221) mit dem Hauptkörperabschnitt (223) durch Presspassung durchgeführt wird.

11. Verfahren nach Anspruch 9, wobei der untere Endabschnitt (221) einen Vorsprung (225) aufweist, der von mindestens einem Teil eines Außenumfangs davon nach außen vorsteht, der Hauptkörperabschnitt (223) eine Aussparung (224) definiert, die sich in einen Teil davon erstreckt, an dem der Vorsprung (225) montiert ist, und Schritt (c) durch Einsetzen des Vorsprungs (225) in die Aussparung (224) durchgeführt wird.

12. Verfahren zum Herstellen des Verbinders (200) nach einem der Ansprüche 1 bis 7, wobei das Verfahren aufweist:
(a) Gießen eines Spritzgussmaterials in eine Form, um einen unteren Endabschnitt (221) zu bilden;
(b) Koppeln eines Anschlussstifts (210) mit dem unteren Endabschnitt (221); und
(c) Koppeln des unteren Endabschnitts (221), mit dem der Anschlussstift (210) gekoppelt ist, mit einem Hauptkörperabschnitt (223);
wobei der untere Endabschnitt (221) und der Hauptkörperabschnitt (223) aus unterschiedlichen Materialien hergestellt sind,
wobei der Hauptkörperabschnitt (223) ein hochwärmebeständiges Material enthält, und
wobei das hochwärmebeständige Material ein Metall oder Keramik ist, das mit einem Material auf Urethanbasis oder anorganischer Basis beschichtet ist, und das Metall ein Metall auf Edelstahlbasis ist.

## Revendications

1. Connecteur (200) pour blocs-batterie (100), le connecteur (200) comprenant un boîtier (220) sur lequel est montée une borne à broche (210) configurée pour servir de chemin de connexion électrique,
le boîtier (220) comprenant :
une partie terminale inférieure (221) à laquelle est couplée la borne à broche (210) ; et
une partie de corps principal (223) possédant une partie de cloison (222) configurée pour empêcher toute déformation de la borne à broche (210) lorsqu'une borne externe est couplée à la borne à broche (210), la partie terminale inférieure (221) étant montée sur la partie de corps principal (223),
la partie terminale inférieure (221) et la partie de corps principal (223) étant réalisées avec des matériaux différents,
la partie de corps principal (223) comprenant un matériau à haute résistance à la chaleur, et
le matériau à haute résistance à la chaleur étant un métal ou une céramique revêtu/e d'une matière à base d'uréthane ou à base inorganique, et le métal étant un métal à base d'acier inoxydable.

2. Connecteur (200) selon la revendication 1, le matériau à haute résistance à la chaleur, dont se compose la partie de corps principal (223), étant un matériau qui maintient sa forme sans fondre, même en présence de hautes température de 1000°C ou supérieures.

3. Connecteur (200) selon la revendication 1, une taille plane de la partie terminale inférieure (221) étant égale à une taille plane d'un intérieur de la partie de corps principal (223).

4. Connecteur (200) selon la revendication 1, la partie terminale inférieure (221) possédant une protubérance (225) faisant saillie vers l'extérieur depuis au moins une partie d'un pourtour extérieur de celle-ci, la partie de corps principal (223) définissant un évidement (224) s'étendant dans une partie de celle-ci, sur lequel la protubérance (225) est montée, et la protubérance (225) étant insérée dans l'évidement (224) afin que la partie terminale inférieure (221) soit fixée sur la partie de corps principal (223).

5. Connecteur (200) selon la revendication 1, la partie terminale inférieure (221) comprenant une matière plastique dont le point de fusion est inférieur à celui d'un matériau dont se compose la partie de corps principal (223).

6. Connecteur (200) selon la revendication 5, la borne à broche (210) étant couplée à la partie terminale inférieure (221) par moulage par injection.

7. Connecteur (200) selon une quelconque des revendications 1 à 6, le connecteur (200) étant un connecteur basse tension.

8. Bloc-batterie (100) dans lequel est monté le connecteur (200) selon une quelconque des revendications 1 à 7.

9. Procédé de fabrication du connecteur (200) selon une quelconque des revendications 1 à 7, le procédé comprenant :
(a) le positionnement d'une borne à broche (210) dans un moule ;
(b) l'adjonction d'un matériau d'injection pour former une partie terminale inférieure (221) ; et
(c) le couplage de la partie terminale inférieure (221), à laquelle la borne à broche (210) est couplée, à une partie de corps principal (223),
la partie terminale inférieure (221) et la partie de corps principal (223) étant réalisées avec différents matériaux,
la partie de corps principal (223) comprenant un matériau à haute résistance à la chaleur, et
le matériau à haute résistance à la chaleur étant un métal ou une céramique revêtu/e d'une matière à base d'uréthane ou à base inorganique, et le métal étant un métal à base d'acier inoxydable.

10. Procédé selon la revendication 9,
une taille plane de la partie terminale inférieure (221) étant égale à une taille plane d'un intérieur de la partie de corps principal (223), et
l'étape (c) étant effectuée par le biais d'un processus de couplage à ajustement serré de la partie terminale inférieure (221) à la partie de corps principal (223).

11. Procédé selon la revendication 9, la partie terminale inférieure (221) possédant une protubérance (225) faisant saillie vers l'extérieur depuis au moins une partie d'un pourtour extérieur de celle-ci, la partie de corps principal (223) définissant un évidement (224) s'étendant dans une partie de celle-ci, sur lequel la protubérance (225) est montée, et l'étape (c) s'effectuant en insérant la protubérance (225) dans l'évidement (224).

12. Procédé de fabrication du connecteur (200) selon une quelconque des revendications 1 à 7, le procédé comprenant :
(a) le versement d'une matière d'injection dans un moule afin de former la partie terminale inférieure (221) ;
(b) le couplage d'une borne à broche (210) à la partie terminale inférieure (221) ; et
(c) le couplage de la partie terminale inférieure (221), à laquelle est couplée la borne à broche (210), à une partie de corps principal (223) ;
la partie terminale inférieure (221) et la partie de corps principal (223) étant réalisées avec des matériaux différents,
la partie de corps principal (223) comprenant un matériau à haute résistance à la chaleur, et
le matériau à haute résistance à la chaleur étant un métal ou une céramique revêtu/e d'une matière à base d'uréthane ou à base inorganique, et le métal étant un métal à base d'acier inoxydable.
